# EUROPEAN PATENT APPLICATION

(11) **EP 3 789 190 A1**
(43) Date of publication of application: **10.03.2021**
(21) Application number: 19195431.2
(22) Date of filing: 04.09.2019
(51) Int. Cl.: B29C 70/08, B29C 70/30

(54) **METHOD FOR MANUFACTURING COMPOSITE MATERIAL**

(71) Applicant: Corex Materials Corporation, Taichung City 42756 (TW)
(72) Inventor: CHIU, Shao-Chen, 42756 Taichung City (TW); LO, Chang-Ting, 42756 Taichung City (TW); HUANG, Shih-Yu, 42756 Taichung City (TW)
(74) Representative: Lang, Christian

(57) **Abstract**

A method for manufacturing a composite material is provided, including following steps of: (1) providing a thermoplastic prepreg (10) which includes a first fibrous layer (11) pre-impregnated with thermoplastic resin, wherein the first fibrous layer (11) includes at least one layer which has a thickness smaller than or equal to 0.1 mm, and at least a portion of the at least one layer includes fibers of parallel; (2) providing a thermosetting prepreg (20) which includes a second fibrous layer (21) pre-impregnated with unsolidified thermosetting resin; (3) combining the thermoplastic prepreg (10) with the thermosetting prepreg (20) by thermoforming to form a non-smooth bonding interface (30) therebetween; (4) cooling the thermoplastic prepreg (10) and the thermosetting prepreg (20) which are combined in the step (3) to form the composite material.

## Description

### BACKGROUND OF THE INVENTION

### Field of the Invention

The present invention relates to a method for manufacturing a composite material.

### Description of the Prior Art

Generally, a conventional thermosetting composite material has a rough exterior after curing. To have a smooth and shiny appearance, the thermosetting composite material has to be processed by multiple steps of grinding and polishing, which results in complicated manufacturing process and high cost. Moreover, each of layers of a conventional composite material has to be adhered to one another by an adhesive material. However, the difference in properties between the layers of the conventional composite material and the adhesive material may result in insufficient adhesion between the layers so that the layers are easy to peel off. Moreover, the thickness and weight of the thermosetting composite material are increased.

The present invention is, therefore, arisen to obviate or at least mitigate the above-mentioned disadvantages.

### SUMMARY OF THE INVENTION

The main object of the present invention is to provide a method for manufacturing a composite material, wherein the method has simple steps and the composite material has good structural strength.

To achieve the above and other objects, the present invention provides a method for manufacturing a composite material, including following steps of: (1) providing a thermoplastic prepreg which includes a first fibrous layer pre-impregnated with thermoplastic resin, wherein the first fibrous layer includes at least one layer which has a thickness smaller than or equal to 0.1 mm, and at least a portion of the at least one layer includes fibers of in parallel; (2) providing a thermosetting prepreg which includes a second fibrous layer pre-impregnated with unsolidified thermosetting resin; (3) combining the thermoplastic prepreg and the thermosetting prepreg by thermoforming to form a non-smooth bonding interface therebetween; (4) cooling the thermoplastic prepreg and the thermosetting prepreg which are combined in the step (3) to form the composite material.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a flow block diagram of a first preferable embodiment of the present invention;
Fig. 2 is a breakdown drawing of a composite material of the first preferable embodiment of the present invention;
Fig. 3 is a cross-sectional view of the composite material of the first preferable embodiment of the present invention;
Fig. 4 is a breakdown drawing of a composite material of a second preferable embodiment of the present invention;

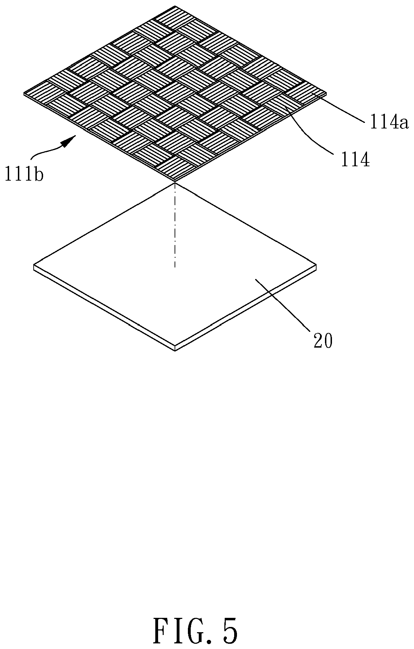

Fig. 5 is a breakdown drawing of a composite material of a third preferable embodiment of the present invention.

### DETAILED DESCRIPTION OF THE PREFERRED EMBODIMENTS

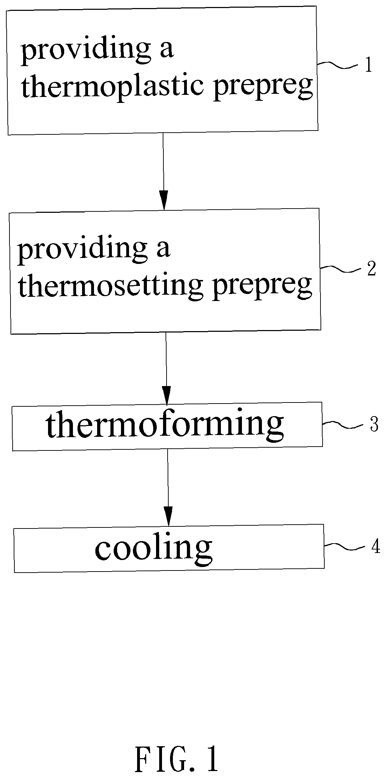

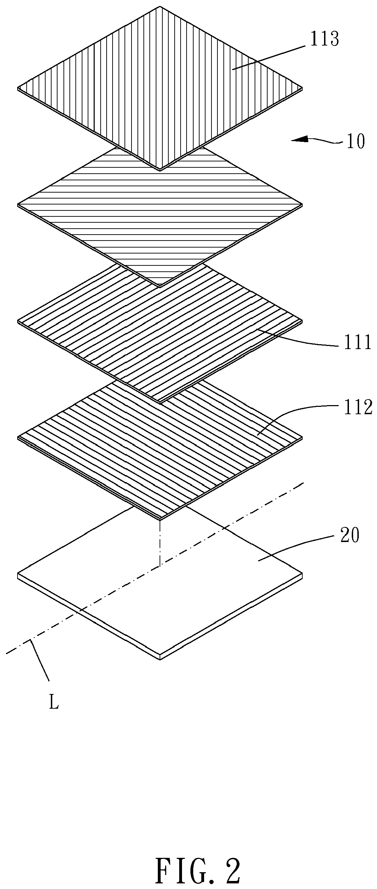

Please refer to Figs. 1 to 3 for a first preferable embodiment of the present invention. A method for manufacturing a composite material of the present invention includes following steps of: (1) providing a thermoplastic prepreg 10 which includes a first fibrous layer 11 pre-impregnated with thermoplastic resin, wherein the first fibrous layer 11 includes at least one layer 111 which has a thickness smaller than or equal to 0.1 mm, and at least a portion of the at least one layer 111 includes fibers of in parallel; (2) providing a thermosetting prepreg 20 which includes a second fibrous layer 21 pre-impregnated with unsolidified thermosetting resin; (3) combining the thermoplastic prepreg 10 and the thermosetting prepreg 20 by thermoforming to form a non-smooth bonding interface 30 therebetween; (4) cooling the thermoplastic prepreg 10 and the thermosetting prepreg 20 which are combined in the step (3) to form the composite material. Therefore, the method for manufacturing the composite material is simple, and the thermoplastic material and the thermosetting material can be stably connected without any adhesive materials.

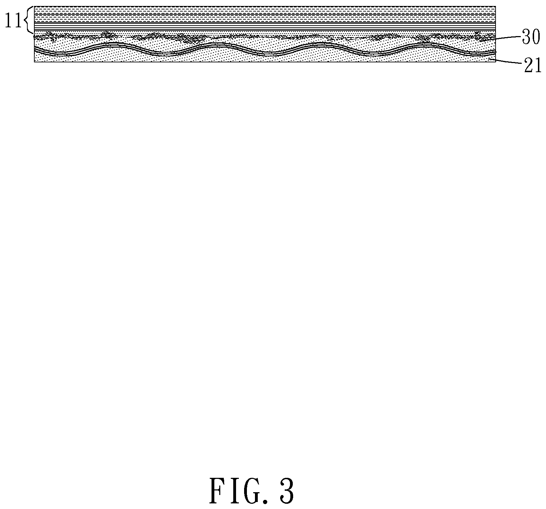

In the step (1), after being impregnated with the thermoplastic resin, each of the at least one layer 111 preferably has a porosity smaller than or equal to 1%. In this embodiment, layers 111 are respectively impregnated with the thermoplastic resin and then laminated to form the thermoplastic prepreg 10, so that the thermoplastic resin can be uniformly infiltrated into each of the layers 111, the thermoplastic prepreg is easy to be thermoformed, and the thermoplastic prepreg has low porosity, preferable structural strength and smooth appearance. In other embodiments, each of the layers may be laminated and then impregnated with the thermoplastic resin. A thermoforming temperature in the step (3) is between 100 and 300°C and is adjustable according to properties of resins. The thermoforming temperature is higher than or equal to a curing temperature of the thermosetting resin, and the curing temperature of the thermosetting resin is higher than a glass transition temperature (Tg) of thermoplastic resin. In thermoforming, the thermoplastic resin and the unsolidified thermosetting resin are at least partially intermixed with each other to integrally form the non-smooth bonding interface 30 (refer to an intermixed area, as shown in figure 3) between the thermoplastic prepreg 10 and the thermosetting prepreg 20 so as to provide a strong bonding. The thermoforming is carried out at a pressure between 1 and 50 bar, and the pressure is adjustable according to various requirements so as to improve connecting strength and molding results.

The thermoplastic resin may be chosen from amorphous polymer or semi-crystalline polymer for high toughness, short cycle time and easy reprocessing. The amorphous polymer may be poly(methyl methacrylate) (PMMA), polycarbonate (PC) or polysulfone, and the semi-crystalline polymer may be polypropylene (PP), polyethylene terephthalate (PET) or polyamide (PA). Thicknesses of the thermoplastic prepreg 10 and the thermosetting prepreg 20 are adjustable by choosing fiber volume ratio or resin content according to various product requirements. In other embodiments, the thermoplastic prepreg may be thermoformed into a thermoplastic plate before the step (3). The thermoplastic resin provides a smooth and shiny appearance to the composite material, and the composite material is unnecessary to be ground and polished after curing.

Specifically, each of the first fibrous layer 11 and the second fibrous layer 21 includes at least one of polymer fiber, Kevlar fiber, carbon fiber, glass fiber, basalt fiber, quartz fiber and natural fiber. Preferably, the first fibrous layer 11 includes a plurality of said layers 111 each including fibers non-parallel to fibers of at least another one of the plurality of said layers 111 so as to increase structural strength of the composite material. The plurality of said layers 111 include a surface layer 113 and at least one unidirectional fabric layer 112 which are laminated, and fibers of each of the at least one unidirectional fabric layer 112 are orientated in an angle of 0°, ±15°, ±17°, ±22°, +30°, +45°, ±60°, ±75° or 90° relative to a baseline L of the thermosetting prepreg. In this embodiment, the plurality of said layers 111 include four said unidirectional fabric layers 112 which are laminated, and a top layer of the four said unidirectional fabric layers 112 is the surface layer 113. Relative to the baseline L, fibers of the four said unidirectional fabric layers 112 are orientated in an angle of +45°, -45°, 0°, 90° in sequence in a direction toward the thermosetting prepreg 20, and the fibers of each of the four said unidirectional fabric layers 112 are densely arranged so as to prevent voids formed in the composite material after thermoforming. In other embodiments, numbers of the plurality of said layers and the unidirectional fabric layers and orientations of fibers of each of the plurality of said layers may be different according to various requirements.

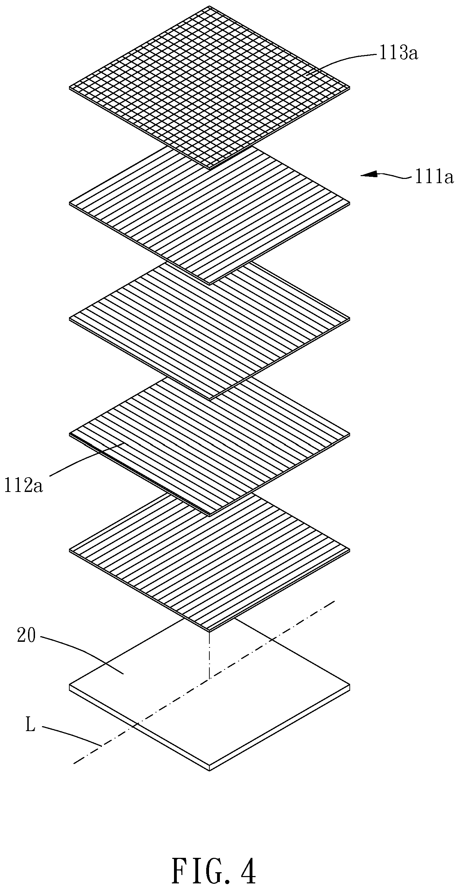

In a second preferable embodiment of the present invention, the plurality of said layers 111a include the surface layer 113a and four said unidirectional fabric layers 112a which are laminated. The surface layer 113a is a woven layer which provides a diversified appearance. Relative to the baseline L, fibers of the four said unidirectional fabric layers 112a are orientated in an angle of 0°, 90°, 90°, 0° in sequence in a direction from the surface layer 113a toward the thermosetting prepreg 20 (as shown in figure 4) so as to provide preferable structural strength.

In a third preferable embodiment of the present invention, at least one of the layer 111b is woven by a plurality of unidirectional fabric strips 114, 114a, and fibers of adjacent two of the plurality of unidirectional fabric strips 114, 114a are perpendicular to each other, for example but not limited to plain weave or twill weave. Therefore, the composite material has advantages of special appearance, thin thickness and light weight. However, the fibers of adjacent two of the plurality of unidirectional fabric strips may be arranged at different angle; the first fibrous layer may include a plurality of said layers woven by the plurality of unidirectional fabric strips.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A method for manufacturing a composite material, including following steps of:
(1) providing a thermoplastic prepreg (10) which includes a first fibrous layer (11) pre-impregnated with thermoplastic resin, wherein the first fibrous layer (11) includes at least one layer (111, 111a, 111b) which has a thickness smaller than or equal to 0.1 mm, and at least a portion of the at least one layer (111, 111a, 111b) includes fibers of in parallel;
(2) providing a thermosetting prepreg (20) which includes a second fibrous layer (21) pre-impregnated with unsolidified thermosetting resin;
(3) combining the thermoplastic prepreg (10) and the thermosetting prepreg (20) by thermoforming to form a non-smooth bonding interface (30) therebetween;
(4) cooling the thermoplastic prepreg (10) and the thermosetting prepreg (20) which are combined in the step (3) to form the composite material.

2. The method for manufacturing the composite material of claim 1, wherein a thermoforming temperature in the step (3) is between 100°C and 300°C.

3. The method for manufacturing the composite material of claim 2, wherein the thermoforming temperature is higher than or equal to a curing temperature of the thermosetting resin, and the curing temperature of the thermosetting resin is higher than a glass transition temperature (Tg) of the thermoplastic resin.

4. The method for manufacturing the composite material of claim 1, wherein the thermoforming is carried out at a pressure between 1 and 50 bar.

5. The method for manufacturing the composite material of claim 1, wherein the thermoplastic prepreg is thermoformed into a thermoplastic plate before the step (3).

6. The method for manufacturing the composite material of claim 1, wherein each of the first fibrous layer (11) and the second fibrous layer (21) includes at least one of polymer fiber, Kevlar fiber, carbon fiber, glass fiber, basalt fiber, quartz fiber and natural fiber.

7. The method for manufacturing the composite material of claim 1, wherein the first fibrous layer (11) includes a plurality of said layers (111, 111a) each including fibers non-parallel to fibers of at least another one of the plurality of said layers (111, 111a).

8. The method for manufacturing the composite material of claim 1, wherein the first fibrous layer (11) includes a plurality of said layers (111, 111a), the plurality of said layers (111, 111a) include a surface layer (113, 113a) and at least one unidirectional fabric layer (112, 112a) which are laminated, and fibers of each of the at least one unidirectional fabric layer (112, 112a) are orientated in an angle of 0°, +15°, +17°, +22°, +30°, +45°, +60°, +75° or 90° relative to a baseline (L) of the thermosetting prepreg (20).

9. The method for manufacturing the composite material of claim 1, wherein at least one of the layer (111b) is woven by a plurality of unidirectional fabric strips (114, 114a), and fibers of adjacent two of the plurality of unidirectional fabric strips (114, 114a) are perpendicular to each other.

10. The method for manufacturing the composite material of claim 1, wherein in the step (1), after being impregnated with the thermoplastic resin, each of the at least one layer (111, 111a, 111b) has a porosity smaller than or equal to 1%.
